# EUROPÄISCHE PATENTSCHRIFT

(11) **EP 1 062 451 B1**
(45) Veröffentlichungstag und Bekanntmachung des Hinweises auf die Patenterteilung: **05.06.2002**
(21) Anmeldenummer: 99944365.8
(22) Anmeldetag: 12.08.1999
(51) Int. Cl.: F16L 11/08, F16L 11/02

(54) **FLEXIBLER STRANGFÖRMIGER HOHLKÖRPER**
HOLLOW BODY IN THE FORM OF A FLEXIBLE BAR
CORPS CREUX EN FORME DE BARRE FLEXIBLE

(30) Priorität: 13.08.1998 DE 19837497
(43) Veröffentlichungstag der Anmeldung: 27.12.2000
(73) Patentinhaber: Aeroquip Zweigniederlassung der Aeroquip-Vickers International GmbH, 76532 Baden-Baden (DE)
(72) Erfinder: ENDERS, Silvia, D-76532 Baden-Baden (DE); ULLRICH, Holger, D-76437 Rastatt (DE); FRITZ, Thomas, D-76593 Gernsbach (DE)
(74) Vertreter: Gleiss, Alf-Olav, Dr.jur. Dipl.-Ing.
(86) Internationale Anmeldenummer: EP9905849
(87) Internationale Veröffentlichungsnummer: WO0009929

(56) Entgegenhaltungen:
- EP-A- 0 375 608
- EP-A- 0 384 995

## Beschreibung

Die Erfindung betrifft einen flexiblen strangförmigen Hohlkörper mit einem von einem Mantel umschlossenen Innenraum zum Transport von Medien.

Flexible strangförmige Hohlkörper der gattungsgemäßen Art sind bekannt. Diese nachfolgend auch als Schlauch bezeichneten strangförmigen Hohlkörper werden in vielen Gebieten der Technik zum Transport von flüssigen oder gasförmigen Medien eingesetzt. Bei der Anwendung in klimatechnischen Anlagen, beispielsweise in Kraftfahrzeugen, werden derartige Schläuche zum Transport von Kältemitteln eingesetzt. Kältemittel haben die Eigenschaft, daß diese flüchtig sind, die, wenn diese in die Erdatmosphäre gelangen, zu schädlichen Einflüssen führen. Um das zu vermeiden, sollen natürliche Kältemittel, zum Beispiel CO₂ eingesetzt werden. Bei bekannten Kältemittelschläuchen ist nachteilig, daß diese gegenüber natürlichen Kältemitteln, insbesondere gegenüber Kohlendioxid CO₂, nicht diffusionsdicht sind und eine hohe Permeabilität aufweisen.

Aus der EP 0 375 608 A1 ist ein flexibles Medientransportrohr bekannt, bei dem zur Verringerung einer Permeation einer Sperrschicht in einen Mantel eines flexiblen strangförmigen Hohlkörpers integriert ist.

Die Sperrschicht wird von einer längslaufend oder spiralförmig an den Bandkanten überlappenden Metallfolie gebildet. Bei dieser Anordnung ist nachteilig, daß insbesondere bei hoher Biegebeanspruchung eine Dichtigkeit der Sperrschicht nicht in ausreichendem Maße gewährleistet werden kann.

Es ist daher Aufgabe der Erfindung, einen flexiblen strangförmigen Hohlkörper der gattungsgemäßen Art zu schaffen, der eine geringe Permeabilität bei großer Flexibilität im besonderen gegen CO₂, aufweist.

Erfindungsgemäß wird diese Aufgabe durch einen flexiblen strangförmigen Hohlkörper mit den in Anspruch 1 genannten Merkmalen gelöst. Dadurch, daß in den Mantel des Hohlkörpers eine Sperrschicht integriert ist, die für flüchtige Moleküle des zu transportierenden Mediums undurchlässig ist, und die Sperrschicht aus schuppenförmig angeordneten Teilelementen besteht, wird eine Permeation durch den flexiblen strangförmigen Hohlkörper mit großer Effizienz verhindert, zumindest auf einen vernachlässigbar kleinen Wert reduziert. Somit wird es möglich, insbesondere wenn vorzugsweise die flexiblen strangförmigen Hohlkörper als Kältemittelschlauch eingesetzt werden, Kältemittel zu transportieren, ohne daß flüchtige Bestandteile der Kältemittel in die Atmosphäre gelangen können. Eine geringe Permeationsrate gewährleistet gleichzeitig eine zuverlässige Funktion einer mit dem Kältemittel zu versorgenden Kälteanlage. Die schuppenartige Anordnung der Teilelemente läßt insbesondere eine Biegebeanspruchung des flexiblen Hohlkörpers nach wie vor zu. Aufgrund der Überlappung der Teilelemente wird bei einer Biegebeanspruchung eine Dichtheit der Sperrschicht nicht beeinträchtigt. Die schuppenartige Anordnung der Teilelemente führt dazu, daß bei einer Biegebeanspruchung des flexiblen strangförmigen Hohlkörpers die Sperrschicht nicht bricht. Ein Brechen beziehungsweise Beschädigen der Sperrschicht würde zu einer Erhöhung der Permeationsrate führen.

Die schuppenartige Ausbildung kann sehr vorteilhaft durch Erzeugen einer entsprechenden Kristallstruktur während eines vorzugsweise vorgesehenen Aufdampfens einer metallischen Sperrschicht erreicht werden.

Die schuppenartige Ausbildung der Kristallstruktur kann vorzugsweise durch Bedampfen einer als Trägerschicht dienenden Lage des Mantels mit einer kristallinen Substanz, beispielsweise aus Metall oder einem Kunststoff erhalten werden. Hierdurch entstehen kristalline, absolut undurchlässige Bereiche (Plättchen) auf der Oberfläche der als Träger dienenden Lage des Mantels. Hierdurch wird erreicht, daß in einem ungedehnten, das heißt unbelasteten Zustand der flexible strangförmige Hohlkörper (Schlauch) fast vollständig undurchlässig gegenüber dem zu führenden Kältemittel ist. Lediglich durch äußerst kleine Nähte zwischen den aufgedampften Plättchen kann es zu einer vernachlässigbar kleinen Permeation kommen. Werden nun die Plättchen so aufgedampft, daß diese überlappen, kann auch bei einer Biegebeanspruchung oder Dehnbeanspruchung des Schlauches ein Überdeckungsgrad der Plättchen sichergestellt werden, so daß auch in einem derartigen Zustand des Schlauches beispielsweise 99 % der gesamten Oberfläche mit den kristallinen Plättchen bedeckt ist.

Insbesondere ist hierdurch vorteilhaft, daß die mit den kristallinen Plättchen versehenen flexiblen strangförmigen Hohlkörper auch im Hochdruckbereich eingesetzt werden können und die geringe Permeabilität erhalten bleibt. Derartige mit der erfindungsgemäßen Sperrschicht versehende Hochdruckdehnschläuche zeichnen sich durch eine hohe Flexibilität, Schwingungsdämpfung und günstige Beeinflussung der Akustik aus, so daß diese Vorteile bei gleichzeitiger Gewährleistung einer geringen Permeabilität genutzt werden können.

Insbesondere läßt sich in Hochdruckdehnschläuchen, die die erfindungsgemäße Sperrschicht aufweisen als Kältemittel Kohlendioxid CO₂ einsetzen. Der Einsatz von Kohlendioxid als Kältemittel in Hochdruckbereichen führt an sich zu dem Problem einer sogenannten dekompressiven Explosion bei plötzlichem Druckabfall. Hierbei kommt es zur schlagartigen Bildung größerer Aggregate des Kältemittels in einem mit dem Kältemittel in Kontakt stehenden Werkstoff. Dies würde zu einer Schädigung beziehungsweise Zerstörung des Werkstoffes führen. Durch die erfindungsgemäße Sperrschicht wird nunmehr erreicht, daß die Schädigung des Werkstoffes, hier des Mantels des flexiblen strangförmigen Hohlkörpers nicht eintreten kann, da eine Permeation von Molekülen des als Kältemittel eingesetzten Kohlendioxids in den Mantel verhindert wird.

Insbesondere durch die bereits erwähnte schuppenförmige Anordnung der kristallinen Plättchen wird auch bei einer Hochdruckdehnung die Permeation verhindert beziehungsweise auf ein vernachlässigbares Minimum reduziert.

Ferner ist bevorzugt, wenn die Sperrschicht aus schuppenartig angeordneten Teilelementen besteht, die in Längserstreckung des Hohlkörpers und/oder koaxial zu einer Längsachse des Hohlkörpers überlappen. Hierdurch wird eine dichte Anordnung der Sperrschicht erreicht, die darüber hinaus eine Flexibilität des Hohlkörpers nicht beziehungsweise nur unwesentlich beeinträchtigt.

In bevorzugter Ausgestaltung der Erfindung ist vorgesehen, daß die Sperrschicht auf einer äußeren Mantelfläche einer inneren Lage des Mantel angeordnet ist. Hierdurch wird vorzugsweise möglich, die Sperrschicht in den Mantel zu integrieren ohne daß dieser einen Querschnitt des Innenraums des Hohlkörpers beeinträchtigt. Die innere Mantelfläche der inneren Lage des Mantels kann somit auf das zu transportierende Medium abgestimmt werden, so daß ein möglichst geringer Strömungswiderstand gegeben ist. Die auf der äußeren Mantelfläche der inneren Lage aufgebrachte Sperrschicht verhindert dennoch ein durchdiffundieren von flüchtigen Bestandteilen des zu transportierenden Mediums durch den Mantel. Falls diese durch die inneren Lage des Mantels diffundieren, stoßen diese dann auf die Sperrschicht und können den Mantel nicht passieren. Somit ist eine geringe Permeabilität des Mantels gewährleistet.

In weiterer bevorzugter Ausgestaltung der Erfindung ist vorgesehen, daß die Sperrschicht aus Metall oder einem Kunststoff besteht. Hierdurch kann in einfacher Weise in Abstimmung auf das zu transportierende Medium, insbesondere Kältemittel ein Werkstoff ausgesucht werden, der eine besonders gute Sperrwirkung gegenüber flüchtigen Bestandteilen des zu transportierenden Mediums aufweist.

Ferner ist in bevorzugter Ausgestaltung der Erfindung vorgesehen, daß die Sperrschicht mit der äußeren Mantelfläche der inneren Lage des Mantels kraftschlüssig verbunden ist. Hierdurch wird erreicht, daß während eines späteren bestimmungsgemäßen Einsatzes des flexiblen strangförmigen Hohlkörpers ein Lösen der Sperrschicht verhindert werden kann, so daß eine erreichte geringe Permeabilität aufrechterhalten bleibt. Bevorzugt ist vorgesehen, daß zur Erhöhung einer Haftfestigkeit zwischen der Sperrschicht und der Mantelfläche, die Mantelfläche physikalisch und/oder chemisch behandelt ist. Hierdurch läßt sich vorzugsweise insbesondere eine Aufrauhung erzielen, die einen besseren Haftverbund mit der nachträglich aufgebrachten Sperrschicht gewährleistet.

Insbesondere ist bevorzugt, wenn eine Erhöhung der Haftfestigkeit zwischen der Sperrschicht und der Mantelfläche durch eine Polarisierung oder Aktivierung des Materials des Mantels zumindest im Oberflächenbereich der Mantelfläche der inneren Lage des Mantels erhalten wird. Hierdurch lassen sich entsprechend dem Material des Mantels, der bevorzugterweise aus einem Polymer besteht, polare Gruppen in die molekulare Grundstruktur des Mantels einbauen, die eine Verbesserung der Beschichtung der Mantelfläche mit der Sperrschicht gewährleisten.

Darüber hinaus ist in bevorzugter Ausgestaltung der Erfindung vorgesehen, daß zwischen der Sperrschicht und der Mantelfläche ein zusätzlicher Haftvermittler angeordnet ist. Dieser zusätzliche Haftvermittler führt zu einer besonders festen und dauerhaften kraftschlüssigen Verbindung zwischen der Sperrschicht und dem Mantel, so daß auch bei relativ starker mechanischer Beanspruchung während des bestimmungsgemäßen Einsatzes der Haftverbund zwischen der Sperrschicht und dem Mantel erhalten bleibt, und die geringe Permeabilität aufrechterhalten werden kann.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: einen Querschnitt durch einen Kältemittelschlauch und
- Figur 2: einen Längsschnitt durch einen Abschnitt eines Kältemittelschlauchs.

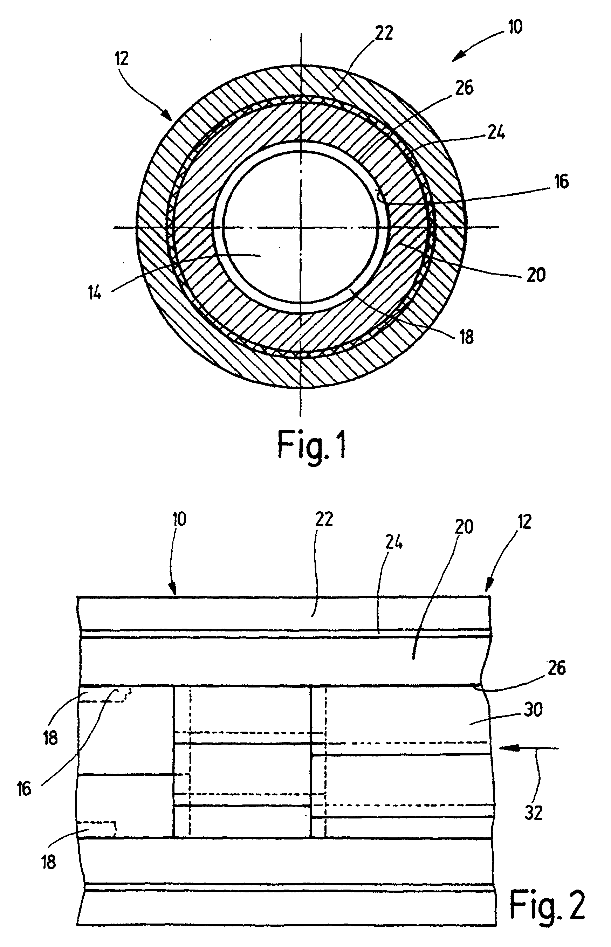

Figur 1 zeigt einen Kältemittelschlauch 10 in einem Querschnitt. Der Kältemittelschlauch 10 umfaßt einen insgesamt mit 12 bezeichneten Mantel, der einen Innenraum 14 umschließt. Der Mantel 12 wird von einem flexiblen strangförmigen Hohlkörper gebildet, der einen vorzugsweise kreiszylindrisch ausgebildeten Innenraum 14 umschließt. Nach weiteren Ausführungsbeispielen kann der Innenraum 14 auch eine andere Form, beispielsweise oval oder dergleichen aufweisen. Der Mantel 12 ist mehrlagig ausgebildet. Um eine Innenlage 18 ist eine Mittellage 20 angeordnet, an die sich eine Außenlage 22 anschließt. Zwischen der Mittellage 20 und der Außenlage 22 ist eine Verstärkungslage 24 angeordnet. Die Lagen 18, 20 und 22 des Mantels 12 bestehen beispielsweise aus einem polymeren Material. Die Verstärkungslage 24 besteht beispielsweise aus einer flexiblen gewebearmierten Schicht.

Auf eine äußere Mantelfläche 16 der inneren Lage 18 ist eine Sperrschicht 26 aufgebracht. Die Sperrschicht 26 ist vollflächig mit der Mantelfläche 16 kraftschlüssig verbunden. Die Sperrschicht 26 kann beispielsweise derart erzielt werden, daß zunächst die innere Lage 18 erzeugt wird, auf diese die Sperrschicht 26 aufgebracht wird und der nachfolgende Schichtaufbau auf die Sperrschicht 26 erfolgt.

Die Sperrschicht 26 besteht beispielsweise aus einem Metall oder einem Kunststoff. Das Material der Sperrschicht 26 wird auf ein durch den Innenraum 14 des Kältemittelschlauchs 10 zu transportierendes Kühlmittel abgestimmt. Als Kältemittel kommt beispielsweise Kohlendioxid CO₂ in Betracht.

Um eine gute Haftfestigkeit zwischen der Sperrschicht 26 und der inneren Lage 18 zu erreichen, kann die Mantelfläche 16 aufgerauht sein. Dies kann beispielsweise physikalisch, durch mechanisches Angreifen einer geeigneten Vorrichtung oder chemisch durch Laugen, Säuren oder dergleichen erfolgen. Durch die hierdurch erzielte Rauhigkeit wird ein Haftverbund mit der Sperrschicht 26 verbessert. Nach einem weiteren Ausführungsbeispiel kann zwischen der Sperrschicht 26 und der Lage 18 und/oder der Lage 20 ein Haftvermittler eingebracht werden. Die Mantelfläche 16 kann zur Erhöhung der Haftfestigkeit auch polarisiert oder aktiviert sein.

In Figur 2 ist ein schematischer Längsschnitt durch den Kältemittelschlauch 10 gezeigt. Gleiche Teile wie in Figur 1 sind mit gleichen Bezugszeichen versehen und nicht nochmals erläutert. Aus Gründen der Übersichtlichkeit ist in Figur 2 die innere Lage 18 nicht dargestellt, so daß quasi in den aufgeschnittenen Hohlraum 14 auf die Sperrschicht 16 geblickt wird. Diese ist an sich von der inneren Lage verdeckt (links in Figur 2 angedeutet). Anhand des Längsschnittes soll eine weitere Ausführungsvariante verdeutlicht werden, bei der die Sperrschicht 26 aus einzelnen Teilelementen 30 besteht, die schuppenartig an der Mantelfläche 16 anliegen. Die Mantelfläche 16 kann wiederum, wie bereits bei dem zu Figur 1 erläuterten Ausführungsbeispiel, mechanisch und/oder chemisch aufgerauht sein. Ferner kann ein zusätzlicher Haftvermittler vorgesehen sein der entweder zwischen der inneren Lage und der Sperrschicht 26 und/oder der mittleren Lage 20 und der Sperrschicht 26 angeordnet ist. In Figur 2 ist mit einem Pfeil 32 eine gedachte Transportrichtung eines Kältemittels durch den Innenraum 14 angedeutet. Die vorzugsweise vorgesehene schuppenförmige Anordnung (nach einer weiteren Ausführungsvariante kann auf die Überlappung verzichtet werden) der Teilelemente 30 der Sperrschicht 26 kann so erfolgen, daß diese sowohl in Transportrichtung 32 überlappen als auch koaxial zu einer Mittelachse 34 (Figur 1) überlappen. Durch die schuppenförmige Anordnung der Sperrschicht 26 wird eine Flexibilität des Kältemittelschlauchs 10 durch Einbringen der Sperrschicht 26 nur unwesentlich beeinflußt. Die schuppenförmig angeordneten Teilelemente 30 können einer Biegebeanspruchung des Mantels 12 ohne weiteres folgen. Durch das Überlappen der Teilelemente 30 in Transportrichtung 32 und/oder in koaxialer Richtung zur Längsachse 34 kann einer Biegung des Mantels 12 in allen Raumrichtungen durch die Sperrschicht 26 gefolgt werden.

Insgesamt wird deutlich, daß durch das Integrieren der Sperrschicht 26 in den Mantel 12 ein Kältemittel transportiert werden kann, wobei flüchtige Bestandteile des Kältemittels nicht durch den Mantel 12 diffundieren können. Dieser erhält durch die Sperrschicht 26 eine äußerst geringe Permeabilität für die Moleküle des zu transportierenden Kältemittels. Andererseits wird in umgekehrter Richtung ein Diffundieren von Molekülen in den Innenraum 14 durch die Sperrschicht 26 ebenfalls verhindert.

## Patentansprüche

1. Flexibler strangförmiger Hohlkörper mit einem von einem Mantel umschlossenen Innenraum zum Transport von Medien, wobei in den Mantel (12) eine Sperrschicht (26) integriert ist, die für flüchtige Moleküle des zu transportierenden Mediums undurchlässig ist, **dadurch gekennzeichnet, daß** die Sperrschicht (26) aus schuppenförmig angeordneten Teilelementen (30) besteht.

2. Flexibler strangförmiger Hohlkörper nach Anspruch 1, **dadurch gekennzeichnet, daß** die Teilelemente (30) in Transportrichtung (32) des Mediums überlappen.

3. Flexibler strangförmiger Hohlkörper nach einem der vorhergehenden Ansprüche, **dadurch gekennzeichnet, daß** die Teilelemente (30) koaxial zu einer Längsachse (34) des Mantels (12) überlappen.

4. Flexibler strangförmiger Hohlkörper nach Anspruch 1, **dadurch gekennzeichnet, daß** die Sperrschicht (26) auf einer äußeren Metallfläche (16) einer inneren Lage (18) des Mantels angeordnet ist.

5. Flexibler strangförmiger Hohlkörper nach einem der vorhergehenden Ansprüche, **dadurch gekennzeichnet, daß** die Sperrschicht (26) aus Metall besteht.

6. Flexibler strangförmiger Hohlkörper nach einem der vorhergehenden Ansprüche, **dadurch gekennzeichnet, daß** die Sperrschicht (26) aus Kunststoff besteht.

7. Flexibler strangförmiger Hohlkörper nach einem der vorhergehenden Ansprüche, **dadurch gekennzeichnet, daß** die Sperrschicht (26) mit der Mantelfläche (16) kraftschlüssig verbunden ist.

8. Flexibler strangförmiger Hohlkörper nach einem der vorhergehenden Ansprüche, **dadurch gekennzeichnet, daß** die Mantelfläche (16) physikalisch und/oder chemisch zur Erhöhung einer Haftfestigkeit der Sperrschicht (26) behandelt ist.

9. Flexibler strangförmiger Hohlkörper nach einem der vorhergehenden Ansprüche, **dadurch gekennzeichnet, daß** die Mantelfläche (16) aufgerauht ist.

10. Flexibler strangförmiger Hohlkörper nach einem der vorhergehenden Ansprüche, **dadurch gekennzeichnet, daß** das Material des Mantels (12) zumindest im Oberflächenbereich der Mantelfläche (16) polarisiert ist.

11. Flexibler strangförmiger Hohlkörper nach einem der vorhergehenden Ansprüche, **dadurch gekennzeichnet, daß** das Material des Mantels (12) zumindest im Oberflächenbereich der Mantelfläche (16) aktiviert ist.

12. Flexibler strangförmiger Hohlkörper nach einem der vorhergehenden Ansprüche, **dadurch gekennzeichnet, daß** zwischen der Sperrschicht (26) und der Mantelfläche (16) ein Haftvermittler angeordnet ist.

13. Flexibler strangförmiger Hohlkörper nach einem der vorhergehenden Ansprüche, **dadurch gekennzeichnet, daß** der Mantel (12) aus wenigstens einer Lage (18, 20, 22) aus polymerem Werkstoff besteht.

14. Flexibler strangförmiger Hohlkörper nach einem der vorhergehenden Ansprüche, **dadurch gekennzeichnet, daß** der Mantel (12) dreilagig ist.

15. Flexibler strangförmiger Hohlkörper nach einem der vorhergehenden Ansprüche, **dadurch gekennzeichnet, daß** zwischen wenigstens zwei Lagen (20, 22) des Mantels (12) eine Verstärkungslage (24) angeordnet ist.

16. Verwendung eines flexiblen strangförmigen Hohlkörpers nach einem der Ansprüche 1 bis 15 zum Transport eines Kältemittels, insbesondere von Kohlendioxid CO₂.

17. Verwendung eines flexiblen strangförmigen Hohlkörpers nach einem der Ansprüche 1 bis 15 in kältetechnischen Anlagen von Kraftfahrzeugen.

## Claims

1. Hollow body in the form of a flexible bar with an interior space surrounded by a jacket for transportation of media, where there is incorporated in jacket (12) a barrier layer (26) which is impermeable to volatile molecules of the transport medium, **characterised in that** barrier layer (26) consists of subsidiary components (30) arranged in an overlaid layout.

2. Hollow body in the form of a flexible bar in accordance with Claim 1, **characterised in that** subsidiary components (30) overlap in the direction of transport (32) of the transport medium.

3. Hollow body in the form of a flexible bar in accordance with one of the above-mentioned claims, **characterised in that** subsidiary elements (30) overlap coaxially with a longitudinal axis (34) of jacket (12).

4. Hollow body in the form of a flexible bar in accordance with Claim 1, **characterised in that** barrier layer (26) is arranged on an outer metal surface (16) of an inner ply (18) of the jacket.

5. Hollow body in the form of a flexible bar in accordance with one of the above Claims, **characterised in that** barrier layer (26) is made of metal.

6. Hollow body in the form of a flexible bar in accordance with one of the above Claims, **characterised in that** barrier layer (26) is made of plastic.

7. Hollow body in the form of a flexible bar in accordance with one of the above-mentioned Claims, **characterised in that** barrier layer (26) has a locked fit with jacket surface (16).

8. Hollow body in the form of a flexible bar in accordance with one of the above-mentioned Claims, **characterised in that** jacket surface (16) is physically and/or chemically treated for purposes of increasing the adhesion of barrier layer (26).

9. Hollow body in the form of a flexible bar in accordance with one of the above-mentioned Claims, **characterised in that** jacket surface (16) is roughened.

10. Hollow body in the form of a flexible bar in accordance with one of the above-mentioned Claims, **characterised in that** the material of jacket (12) is polarised at least in the surface zone of jacket surface (16).

11. Hollow body in the form of a flexible bar in accordance with one of the above-mentioned Claims, **characterised in that** the material of jacket (12) is activated at least in the surface zone of jacket surface (16).

12. Hollow body in the form of a flexible bar in accordance with one of the above-mentioned claims, **characterised in that** a keying agent is arranged between barrier layer (26) and jacket surface (16).

13. Hollow body in the form of a flexible bar in accordance with one of the above-mentioned Claims, **characterised in that** jacket (12) consists of least one ply (18, 20, 22) of a polymer material.

14. Hollow body in the form of a flexible bar in accordance with one of the above-mentioned Claims, **characterised in that** jacket (12) is three-ply.

15. Hollow body of the form of a flexible bar in accordance with one of the above-mentioned Claims, **characterised in that** a reinforcement ply (24) is arranged between at least two plies (20, 22) of jacket (12).

16. Utilisation of a hollow body in the form of a flexible bar in accordance with one of Claims 1 to 15 for transport of a coolant, particularly carbon dioxide CO₂.

17. Utilisation of a hollow body in the form of a flexible bar in accordance with one of Claims 1 to 15 in the cooling systems of vehicles.

## Revendications

1. Corps creux flexible et en forme de barre avec un espace intérieur enfermé par une enveloppe pour le transport d'agents dans l'enveloppe (12) étant intégrée une couche d'arrêt (26), qui est imperméable pour des molécules volatiles de l'agent à transporter, **caractérisé en ce que** la couche de blocage (26) est à base d'éléments partiels (30) disposés de façon imbriquée.

2. Corps creux flexible et en forme de barre selon la revendication 1, **caractérisé en ce que** les éléments partiels (30) se chevauchent dans le sens de transport (32) de l'agent.

3. Corps creux flexible et en forme de barre selon l'une des revendications précédentes, **caractérisé en ce que** les éléments partiels (30) se chevauchent de façon coaxiale par rapport à un axe longitudinal (34) de l'enveloppe (12).

4. Corps creux flexible et en forme de barre selon la revendication 1, **caractérisé en ce que** la couche d'arrêt (26) est disposée sur une surface métallique (16) extérieure d'une couche (18) intérieure de l'enveloppe.

5. Corps creux flexible et en forme de barre selon l'une des revendications précédentes, **caractérisé en ce que** la couche d'arrêt (26) est en métal.

6. Corps creux flexible et en forme de barre selon l'une quelconque des revendications précédentes, **caractérisé en ce que** la couche d'arrêt (26) est en matière plastique.

7. Corps creux flexible et en forme de barre selon l'une des revendications précédentes, **caractérisé en ce que** la couche d'arrêt (26) est reliée par adhérence à la face périphérique (16).

8. Corps creux flexible et en forme de barre selon l'une des revendications précédentes, **caractérisé en ce que** la face périphérique (16) est traitée au plan physique et/ou chimique pour augmenter une adhérence de la couche d'arrêt (26).

9. Corps creux flexible et en forme de barre selon l'une des revendications précédentes, **caractérisé en ce que** la face périphérique (16) est rendue rugueuse.

10. Corps creux flexible et en forme de barre selon l'une des revendications précédentes, **caractérisé en ce que** le matériau de l'enveloppe (12) est polarisé au moins dans la zone de surface de l'enveloppe périphérique (16).

11. Corps creux flexible et en forme de barre selon l'une des revendications précédentes, **caractérisé en ce que** le matériau de l'enveloppe (12) est activé au moins dans la zone superficielle de la face périphérique (16).

12. Corps creux flexible et en forme de barre selon l'une des revendications précédentes, **caractérisé en ce qu'**un agent adhésif est disposé entre la couche d'arrêt (26) et la face périphérique (16).

13. Corps creux flexible et en forme de barre selon l'une des revendications précédentes, **caractérisé en ce que** l'enveloppe (12) comprend au moins une couche (18, 20, 22) à base de matériau polymère.

14. Corps creux flexible et en forme de barre selon l'une des revendications précédentes, **caractérisé en ce que** l'enveloppe (12) est à trois couches.

15. Corps creux flexible et en forme de barre selon l'une des revendications précédentes, **caractérisé en ce qu'**une couche de renfort (24) est disposée entre au moins deux couches (20, 22) de l'enveloppe.

16. Utilisation d'un corps creux flexible et en forme de barre selon l'une des revendications 1 à 15 pour le transport d'un agent réfrigérant, en particulier de dioxyde de carbone CO2.

17. Utilisation d'un corps creux flexible et en forme de barre selon l'une des revendications 1 à 15 dans des installations frigorifiques de véhicules automobiles.
